# EUROPÄISCHE PATENTSCHRIFT

(11) **EP 1 113 040 B1**
(45) Veröffentlichungstag und Bekanntmachung des Hinweises auf die Patenterteilung: **05.10.2005**
(21) Anmeldenummer: 00126455.5
(22) Anmeldetag: 07.12.2000
(51) Int. Cl.: C08J 7/00, C08J 7/02, C11D 7/50

(54) **Verfahren zur Lackierung von Kunststoffsubstraten**
Process for lacquering plastic surfaces
Procédé pour lacquer des substrats de matières plastiques

(30) Priorität: 22.12.1999 DE 19961983
(43) Veröffentlichungstag der Anmeldung: 04.07.2001
(73) Patentinhaber: E.I. DU PONT DE NEMOURS AND COMPANY, Delaware 19898 (US)
(72) Erfinder: Hellmann, Udo, 42897 Remscheid (DE); Stricker, Wolfgang, 42897 Remscheid (DE)
(74) Vertreter: Gille Hrabal Struck Neidlein Prop Roos

(56) Entgegenhaltungen:
- US-A- 5 300 326
- DATABASE WPI Week 9330 Derwent Publications Ltd., London, GB; AN 1993-240094 XP002171574 & JP 05 163376 A (NIPPON PETROCHEMICALS CO LTD), 29. Juni 1993 (1993-06-29) & CHEMICAL ABSTRACTS, vol. 119, no. 24, 13. Dezember 1993 (1993-12-13) Columbus, Ohio, US; abstract no. 252273,

## Beschreibung

Die Erfindung betrifft ein Verfahren zur Lackierung von Kunststoffsubstraten, insbesondere von unpolaren Kunststoffsubstraten mit einer wasserbasierenden haftvermittelnden Überzugsschicht und bevorzugt mindestens einer weiteren Überzugsschicht. Das Verfahren kann beispielsweise Anwendung finden in der Fahrzeug-, Fahrzeugteile- und Industrielackierung.

Auch in der Automobilindustrie haben sich Kunststoffe als Materialien für bestimmte Fahrzeugteile sowie Fahrzeuganbau- und -zubehörteile sowohl im Innen- als auch im Außenbereich durchgesetzt. Prinzipiell werden Kunststoffe ebenso wie andere Werkstoffe aus dekorativen oder technischen Gründen lackiert. Wichtigste Voraussetzung für eine gute Beschichtung ist die Haftung zum Untergrund. Es ist allgemein bekannt, daß gerade bei der Lackierung von Kunststoffen, insbesondere von relativ unpolaren Kunststoffen, wie z.B. Polypropylen in reiner Form oder in modifizierter Form, mitunter extreme Haftungsprobleme zum Kunststoffuntergrund auftreten. Um eine akzeptable Lackhaftung zu erreichen, werden solche unpolaren Kunststoffe einer oberflächenaktivierenden Vorbehandlung unterworfen. Die am häufigsten angewendeten Verfahren sind das Beflammen, die Plasmabehandlung und die Corona-Entladung. Ebenso ist bekannt, zur Haftungsverbesserung Haftprimer einzusetzen, die direkt auf das Kunststoffsubstrat appliziert werden und haftungsvermittelnde Substanzen, wie insbesondere chlorierte Polyolefine, enthalten.

In der US-A-5 300 326 wird die Beschichtung von Kunststoffsubstraten mit einem wässrigen Überzugsmittel beschrieben. Dabei können die Kunststoffsubstrate vorher mit einem Lösemittel, wie beispielsweise einem Aikohol, vorgereinigt werden. Die JP-05-163376A beschreibt die Beschichtung von Kunststoffoberflächen mit nichtwässrigen Überzugsmitteln mit einer Vorreinigung mit Lösemittelgemischen und anschließender Ozonbehandlung.

Beim Einsatz wasserbasierender Überzugsmittel, die sich aus ökologischen Gesichtspunkten auch in der Kunststoffbeschichtung immer mehr durchsetzen, verstärken sich die Haftungsprobleme noch. Selbst beim Einsatz von wasserbasierenden Überzugsmitteln, die haftvermittelnde Substanzen enthalten, wird nur eine mangelhafte Haftung auf unpolaren Kunststoffoberflächen erzielt.

Aufgabe der Erfindung war es daher, ein Verfahren zur Lackierung von Kunststoffsubstraten bereitzustellen, welches es gestattet, unvorbehandelte unlackierte Kunststoffe universell mit umweltfreundlichen wasserbasierenden haftvermittelnden Schichten zu versehen, die eine zufriedenstellende Haftung auf den verschiedensten Kunststoffuntergründen, insbesondere aber auch auf unpolaren Kunststoffuntergründen aufweisen.

Erfindungsgemäß kann die Aufgabe gelöst werden, indem vor der Applikation einer wasserbasierenden Haftschicht eine Reinigung der unvorbehandelten und unlackierten Kunststoffoberfläche mit Lösemittelgemischen erfolgt.

Gegenstand der Erfindung ist daher ein Verfahren zur Lackierung von Kunststoffsubstraten durch Aufbringen einer Haftschicht aus einem wasserbasierenden haftvermittelnden Überzugsmittel sowie gegebenenfalls mindestens einer weiteren Überzugsschicht, welches dadurch gekennzeichnet ist, dass vor der Applikation des wasserbasierenden haftvermittelnden Überzugsmittels die Kunststoffoberfläche mit einem Gemisch organischer Lösemittel aus einem oder mehreren aliphatischen und/oder cycloaliphatischen Kohlenwasserstoffen des Siedebereiches 25 bis 315°C und/oder einem oder mehreren aromatischen Kohlenwasserstoffen des Siedebereiches 120 bis 190°Cdie im Gemisch mit 1 bis 20 Gew.-% eines oder mehrerer höher polarer organischer Lösemittel vorliegen, gereinigt wird.

Überraschend wurde festegestellt, dass durch den erfindungsgemäßen Einsatz der genannten Lösemittelgemische zur vorbereitenden Reinigung von insbesondere unvorbehandelten und unlackierten Kunststoffoberflächen eine sehr gute Haftung wasserbasierender haftvermittelnder Überzugsschichten auch auf als schwer lackierbar bekannten unpolaren Kunststoffsubstraten erzielt wird. Unter unvorbehandelter Kunststoffoberfläche ist dabei zu verstehen, dass die Kunststoffe keiner oberflächenaktivierenden Behandlung wie z.B. Beflammen, Koronaentladung und Plasmabehandlung unterworden wurden.

Bei den im erfindungsgemäßen Verfahren einsetzbaren aliphatischen und/oder cycloaliphatischen Kohlenwasserstoffen mit einem Siedebereich von 25 bis 315°C handelt es sich beispielsweise um solche mit 5 bis 15 Kohlenstoffatomen im Molekül. Die aliphatischen Kohlenwasserstoffe können linear oder verzweigt sein. Die cycloaliphatischen Kohlenwasserstoffe können gegebenenfalls substituiert sein. Es kann sich beispielsweise um Hydrierungsprodukte des Naphthalins handeln. Die aliphatischen und die cycloaliphatischen Kohlenwasserstoffe können jeweils einzeln oder in Mischung eingesetzt werden. Ebenso können aliphatische und cycloaliphatische Kohlenwasserstoffe gemeinsam in Mischung vorliegen. Gut einsetzbar sind insbesondere Mischungen aliphatischer und/oder cycloaliphatischer Kohlenwasserstoffe, welche als Handelsprodukte erhältlich sind. Es handelt sich dabei um Gemische verschiedener Komponenten mit unterschiedlichen Kettenlängen und/oder unterschiedlicher Anzahl von Kohlenstoffatomen. Es kann sich beispielsweise um aromatenfreie Benzine verschiedener Zusammensetzung und/oder um Benzine mit einem Aromatenanteil, beispielsweise einem Aromatenanteil von etwa 5 bis 20 Gew.-% handeln. Die Benzine sind unter verschiedenen Bezeichnungen als Testbenzine oder Spezialbenzine verschiedener Zusammensetzung im Handel erhältlich, beispielsweise unter den Bezeichnungen Kristalloel®, Shellsol®, Essovarsol®.

Bei den im erfindungsgemäßen Verfahren einsetzbaren aromatischen Kohlenwasserstoffen mit einem Siedebereich von 120 bis 190°C handelt es sich beispielsweise um solche mit 6 bis 15 Kohlenstoffatomen im Molekül. Beispiele hierfür sind substituierte Benzole, z.B. mit ein bis vier C1-C4-Alkylresten substituierte Benzole, wie z.B. Toluol, Xylol, Cumol. Die aromatischen Kohlenwasserstoffe sind einzeln oder in Mischung einsetzbar. Reine aromatische Kohlenwasserstoffe und Mischungen aromatischer Kohlenwasserstoffe sind im Handel erhältlich, Mischungen aromatischer Kohlenwasserstoffe beispielsweise als Shellsol® , Solvesso®, Supersol®. Die Mischungen aromatischer Kohlenwasserstoffe können dabei als reine Aromatenmischung vorliegen, sie können aber auch aliphatische und/oder cycloaliphatische Kohlenwasserstoffe enthalten.

Die aliphatischen und/oder cycloaliphatischen Kohlenwasserstoffe können prinzipiell in Kombination mit aromatischen Kohlenwasserstoffen eingesetzt werden.

Die aliphatischen, cycloaliphatischen und aromatischen Kohlenwasserstoffe sowie die Mischungen daraus können beispielsweise nach der Verdunstungszahl, dem Flammpunkt und/oder der Zündtemperatur der jeweiligen Lösemittel oder Lösemittelgemische ausgewählt werden. Beispiele für bevorzugt einsetzbare Lösemittel bzw. Lösemittelmischungen sind z.B. Xylol, Kristalloel 30, Shellsol D25, Solvesso 100.

Das erfindungsgemäß einsetzbare Gemisch organischer Lösemittel enthält neben den aliphatischen, cycloaliphatischen und/oder aromatischen Kohlenwasserstoffen noch Anteile höherpolarer organischer Lösemittel, beispielsweise Anteile von Alkoholen, Glykolen oder Glykolethern. Beispiele für Alkohole und Glykole sind Ethanol, n-Propanol, Isopropanol, n-Butanol, Isobutanol, tert-Butanol, Amylalkohol, Hexanol, 2-Ethylhexanol, Benzylalkohol, Cyclohexanol, Ethylenglykol, Propylenglykol. Beispiele für Gylkolether sind Ethylglykol, Methylglykol, n-Propylglykol, n-Butylglykol, Methyldiglykol, Ethyldiglykol, Butyldiglykol, Methoxypropanol, Ethoxypropanol, Methoxybutanol. Ein erfindungsgemäß einsetzbares Gemisch organischer Lösemittel enthält 80 bis 99 Gew.-%, bevorzugt 85 bis 98 Gew.-% an aliphatischen und/oder aromatischen Kohlenwasserstoffen mit 1 bis 20 Gew.-%, bevorzugt 2 bis 10 Gew.-% der höherpolaren organischen Lösemitteln, wie z.B. Alkohole, Glykole und/oder Glykolether.

Bei den zu lackierenden Kunststoffsubstraten handelt es sich um solche aus üblichen Kunststoffwerkstoffen wie z.B. Polystyrol, Acrylnitril-Butadien-Styrol-Mischpolymere, Polyvinylchlorid, Polyurethan, Polycarbonat, Polyamid, glasfaserverstärkte ungesättigte Polyester, Polyolefine wie Polypropylen und Polypropylen modifiziert mit Ethylen-Propylen-Dien-Mischpolymeren (EPDM).

Besonders vorteilhaft kann das erfindungsgemäße Verfahren angewendet werden zur Lackierung relativ unpolarer Kunststoffe, wie insbesondere zur Lackierung von Polyolefinen wie Polypropylen und von mit niedrigen EPDM-Anteilen modifiziertem Polypropylen. Die Modifizierung von Polypropylen mit EPDM dient im wesentlichen der Elastifizierung des Kunststoffs und bestimmt unter anderem auch die Lackierbarkeit. Bei geringen EPDM-Anteilen ist die Lackierbarkeit bzw. die Haftung schlecht. Erst bei EPDM-Anteilen von etwa 20 bis 25 Gew.-% spricht man nicht mehr von schwer lackierbaren Kunststoffen. Das erfindungsgemäße Verfahren kann aber besonders vorteilhaft eingesetzt werden zur Lackierung von reinem Polypropylen und Polypropylen/EPDM-Kunststoffen mit niedrigen EPDM-Anteilen von beispielsweise kleiner 20 Gew.-%.

Die Reinigung der unvorbehandelten und unlackierten Kunststoffe erfolgt in üblicher, dem Fachmann bekannter Art und Weise. Vorteilhaft ist es, vor der Reinigung die Kunststoffe zu tempern. Das kann beispielsweise bei 50 bis 80°C innerhalb von etwa 30 bis 90 Minuten erfolgen. Die Reinigung kann mit üblichen Einrichtungen erfolgen, z.B. mittels eines Pinsels oder eines Tuches. Bevorzugt kann jedoch auch so gearbeitet werden, daß gleichzeitig mit der Reinigung eine mechanische Behandlung, z.B. ein Aufrauhen erfolgt. Hierzu kann die Reinigung beispielsweise mit einem mit dem erfindungsgemäß einsetzbaren Lösemittelgemisch getränkten Schleifpad erfolgen. Dabei erfolgt neben der eigentlichen Reinigung gleichzeitig eine gewisse mechanische Behandlung der Kunststoffoberfläche, die Kunststoffoberfläche wird leicht angerauht. Die Reinigung wird im allgemeinen bei Raumtemperatur durchgeführt.

Bevorzugt kann eine Nachreinigung mit dem erfindungsgemäß einsetzbaren Lösemittelgemisch erfolgen, beispielsweise mittels eines Pinsels oder eines angefeuchteten Tuches. Anschließend erfolgt vorteilhafterweise ein Abdunsten der Lösemittel, um im weiteren Verfahren den Einfluß dieser Lösemittel auszuschließen. Das Abdunsten kann beispielsweise bei Raumtemperaturen oder wärmeforciert erfolgen. Bevorzugt kann es bei Raumtemperatur z.B. über eine oder mehrere Stunden erfolgen.

Nach der Abdunstphase kann dann die Lackierung erfolgen. Es werden übliche wasserbasierende haftvermittelnde Überzugsmittel auf die gereinigten Kunststoffsubstrate appliziert. Die Überzugsmittel können übliche wasserverdünnbare Bindemittel enthalten. Beispiele für wasserverdünnbare Bindemittel sind solche auf Basis von Polyurethanen, Epoxidharzen, Poly(meth)acrylaten, Alkyd- und Polyesterharzen. Die Harze können allein oder in Kombination eingesetzt werden. Eine Modifizierung der Harze z.B. durch Acrylierung oder Siliziummodifizierung ist ebenfalls möglich. Die Bindemittel sind durch entsprechende übliche Maßnahmen wasserverdünnbar gemacht. Es kann sich dabei z.B. um eine ionische und/oder nichtionische Modifizierung der Bindemittel und/oder um den Einsatz von Emulgatoren handeln.

Bei den Bindemitteln kann es sich um physikalisch trocknende und/oder chemisch vernetzende Bindemittel handeln. Es können Vernetzer in den Überzugsmitteln enthalten sein. Beispiele für Vernetzer sind Aminoplastharze, Polyamine, blockierte oder freie Polyisocyanate. Die Auswahl der Vernetzer erfolgt in Abhängigkeit vom eingesetzten Bindemittelsystem, d.h. in Abhängigkeit von den reaktiven Gruppen der Bindemittelharze und in Abhängigkeit von den erforderlichen Härtungstemperaturen in dem Fachmann geläufiger Weise. Die Vernetzer können einzeln oder in Kombination eingesetzt werden. Gut einsetzbar sind Bindemittelsysteme auf Basis von OH-funktionellen Komponenten, z.B. OH-funktionellen (Meth)acrylaten, Polyurethanen und/oder Polyestern mit OH-Zahlen von beispielsweise 40 bis 250 mg KOH/g sowie Polyisocyanatvernetzern. Bevorzugt können wasserverdünnbare OH-funktionelle (Meth)acrylcopolymere in Kombination mit lacküblichen Polyisocyanatvernetzern eingesetzt werden. Beispiele für verwendbare anionisch modifizierte wasserverdünnbare OH-funktionelle (Meth)acrylcopolymere sind beispielsweise beschrieben in der EP-A-654 055 und der EP-A-358 979. Beispiele für verwendbare kationisch modifizierte wasserverdünnbare OH-funktionelle (Meth)acrylcopolymere sind beispielsweise beschrieben in der EP-A-661 320. Einsetzbare lackübliche Polyisocyanatvernetzer sind dem Fachmann bekannt und beispielsweise auch in den vorstehend genannten Quellen beschrieben.

Die wasserbasierenden Überzugsmittel enthalten mindestens einen üblichen Haftvermittler. Als Haftvermittler kommen beispielsweise chlorierte Polyolefine in Frage. Als chlorierte Polyolefine können beispielsweise handelsübliche Materialien eingesetzt werden. Es handelt sich insbesondere um chloriertes Polyethylen, chloriertes Polypropylen oder chlorierte Copolymere davon. Es können auch Mischungen der genannten Polymere und Copolymere eingesetzt werden. Die chlorierten Polyolefine haben im allgemeinen einen Chlorierungsgrad von etwa 15 bis 40 Gew.-%. Die Molmasse der chlorierten Polyolefine beträgt vorzugsweise 700 bis 70000. Gegebenenfalls können die Polymere modifiziert sein, z.B. durch Einbau polarer Gruppen, beispielsweise über Maleinsäureanhydrid. Die chlorierten Polyolefine können als Pulver, in Lösemittelform oder als wäßrige Dispersion vorliegen. Ebenso können auch übliche chlorfreie Haftvermittler, z.B. chlorfreie Polyolefine, wie chlorfreies Polypropylen oder chlorfreies Polyethylen, welche gegebenenfalls noch anderweitig modifiziert sein können, eingesetzt werden.

Desweiteren können die wasserbasierenden Überzugsmittel Pigmente, Füllstoffe, übliche lacktechnische Additive und Hilfsstoffe sowie geringe Anteile an organischen Lösemitteln enthalten.

Bei den Pigmenten und Füllstoffen handelt es sich um die üblichen in der Lackindustrie einsetzbaren Füllstoffe und organischen oder anorganischen fargebenden und/oder effektgebenden Pigmente. Beispiele für anorganische Pigmente sind Titandioxid, mikronisiertes Titandioxid, Eisenoxidpigmente und Ruß. Beispiele für organische Pigmente sind Azopigmente und Phthalocyaninpigmente. Beispiele für Füllstoffe sind Siliziumdioxid, Aluminiumsilikat, Magnesiumsilikat und Bariumsulfat.

Beispiele für lacktechnische Additive sind übliche Netzmittel, Dispergierhilfsmittel, Antischaummittel, Verlaufsmittel, Katalysatoren, Rheologieadditive. Die Pigmente, Füllstoffe und Additive werden in üblichen, dem Fachmann geläufigen Mengen, zugesetzt.

Bei den gegebenenfalls vorhandenen organischen Lösemitteln handelt es sich im wesentlichen um übliche lacktechnische Lösemittel. Beispiele für einsetzbare Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit Cl- bis C6-Alkyl, Ethoxypropanol, Butylglykol; Glykole, z.B. Ethylenglykol, Propylenglykol und deren Oligomere, N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe. Bevorzugt sind wassermischbare Lösemittel.

Es ist auch möglich, daß die wasserbasierende haftvermittelnde Überzugsschicht aus einem Überzugsmittel erstellt wird, das im wesentlichen Haftvermittler, wie insbesondere chlorierte oder chlorfreie Polyolefine und Wasser sowie gegebenenfalls organische Lösemittel und Additive enthält, d.h. frei ist von Bindemitteln, wie sie vorstehend genannt wurden.

Die wasserbasierenden Überzugsmittel werden auf übliche Art und Weise, bevorzugt mittels Spritzapplikation appliziert. Die Härtungsbedingungen, insbesondere die Härtungstemperaturen richten sich nach dem eingesetzten Bindemittel/Vernetzer-System und nach der Temperaturempfindlichkeit der zu lackierenden Kunststoffsubstrate. So kann die Härtung beispielsweise bei Raumtemperatur oder forciert bei höheren Temperaturen von z.B. 40 bis 80°C erfolgen. Sie kann jedoch auch bei Temperaturen über 80°C erfolgen, z.B. bei 80 bis 110°C.

Das erfindungsgemäße Verfahren kann zur Einschichtlackierung durchgeführt werden, wobei dann die Haftschicht aus dem wasserbasierenden haftvermittelnden Überzugsmittel die einzige Schicht der Lackierung darstellt. In diesem Fall übernimmt die haftvermittelnde Überzugsschicht gleichzeitig eine schützende und/oder dekorierende Funktion. Entsprechend erfolgt dann die Formulierung der Überzugsmittel mit den erforderlichen Pigmenten, Füllstoffen und Additiven. Die Applikation kann in diesem Fall beispielsweise in einer resultierenden Trockenfilmschichtdicke von 25 bis 40 µm erfolgen.

Bevorzugt wird das erfindungsgemäße Verfahren jedoch zur Mehrschichtlackierung durchgeführt, so daß nach Aufbringen der haftvermittelnden Überzugsschicht die Applikation mindestens einer weiteren Überzugsschicht erfolgt. Die haftvermittelnde Überzugsschicht kann in diesem Fall z.B. als Haftgrundierung oder als Haftfüller aufgebracht werden. Entsprechend der weiteren Funktion der haftvermittelnden Überzugsschicht, z.B. Grundierung oder Füller erfolgt die Formulierung der entsprechenden Überzugsmittel in dem Fachmann geläufiger Weise. Als Haftgrundierung wird das Überzugsmittel in resultierenden Trockenfilmschichtdicken von beispielsweise 1 bis 10 µm, als Haftfüller in resultierenden Trockenfilmschichtdicken von beispielsweise etwa 20 bis 50 µm appliziert.

Im Fall des Auftragens als Haftgrundierung kann auf die Grundierung beispielsweise ein Füller als Folgeschicht aufgebracht werden. Auf die Haftgrundierung bzw. den gegebenenfalls aufgebrachten Haftfüller oder den Füller können dann als Folgeschichten eine farb- und/oder effektgebende Decklackschicht oder ein üblicher Zweischichtaufbau aus farb- und/oder effektgebender Basislackschicht und abschließender Klarlackschicht aufgebracht werden. Die zusätzlich zum haftvermittelnden Überzugsmittel aufzubringenden Überzugsmittel können dabei in beliebiger Form als lösemittelbasierende, wäßrige oder lösemittel- und wasserfreie Überzugsmittel vorliegen. Es handelt sich um die üblichen, in der Kunststofflackierung einsetzbaren Füller-, Einschichtdecklack-, Basislack- und Klarlacküberzugsmittel, deren Auswahl und Einsatz dem Fachmann bekannt sind.

Mit dem erfindungsgemäßen Verfahren werden bei der Applikation von wasserbasierenden Haftschichten direkt auf unvorbehandelte und unlackierte Kunststoffsubstrate, insbesondere auf unpolare Kunststoffsubstrate sehr gute Haftungsergebnisse zum Untergrund erzielt.

Die Erfindung soll an den nachfolgenden Beispielen näher erläutert werden.

### Beispiele

Kunststoffstoßfänger aus Hostalen® PPX 4225 (Polypropylen/EPDM-Blend) (unvorbehandelt und unlackiert) sollen lackiert werden.

Dazu wird zunächst ein erfindungsgemäß einsetzbares Lösemittelgemisch aus 95 Gew.-% Shellsol® D25 und 5 Gew.-% Ethoxypropanol hergestellt.

Zum Vergleich wird ein Lösemittelgemisch aus polaren organischen Lösemitteln hergestellt. Das Gemisch enthält 56 Gew.-% Methoxypropanol, 24 Gew.-% Isobutanol und 20 Gew.-% Isopropanol.

Die Stoßfänger werden 60 Minuten bei 60°C getempert. Anschließend wird ein Stoßfänger mit einem mit dem erfindungsgemäß einsetzbaren Lösemittelgemisch getränkten Schleifpad ultra fine vorbehandelt bzw. gereinigt. Dann wird mit einem mit dem erfindungsgemäßen Lösemittelgemisch angefeuchteten Tuch nachgereinigt. Analog wird der zweite Stoßfänger mit einem mit dem Vergleichslösemittelgemisch getränkten Schleifpad ultra fine vorbehandelt bzw. gereinigt. Dann wird mit einem mit dem Vergleichslösemittelgemisch angefeuchteten Tuch nachgereinigt.

Anschließend läßt man die Lösemittel 1 Stunde lang bei Raumtemperatur abdunsten.

Danach erfolgt die Lackierung. Es wird jeweils ein wasserbasierender Haftfüller der folgenden Zusammensetzung hergestellt und eingesetzt.

| | |
|---|---|
| 16,0 Gew.-% | eines wasserverdünnbaren Aminoacrylatharzes mit OHZ 120 mg KOH/g |
| 2,5 Gew.-% | eines handelsüblichen chlorierten Polyolefins |
| 10,0 Gew.-% | Titandioxid |
| 5,0 Gew.-% | Bariumsulfat |
| 6,0 Gew.-% | Magnesiumsilikat |
| 6,0 Gew.-% | Aluminiumsilikat |
| 3,0 Gew.-% | Xylol |
| 2,0 Gew.-% | Testbenzin K30 |
| 49,0 Gew.-% | vollentsalztes Wasser |

Die Angaben beziehen sich auf den Feststoffgehalt.

Kurz vor der Applikation wird der vorstehend hergestellte Füller mit einem handelsüblichen Polyisocyanat (75 %ig in Methoxypropylacetat) im Volumenverhältnis 4 : 1 intensiv vermischt.

Der Haftfüller wird in einer resultierenden Trockenfilmschichtdicke von etwa 30 µm mittels Spritzapplikation auf den mit dem erfindungsgemäßen Lösemittelgemisch gereinigten Stoßfänger und auf den mit dem Vergleichslösemittelgemisch gereinigten Stoßfänger aufgebracht. Die Härtung erfolgt jeweils 60 Minuten bei 60°C.

Die Haftungsprüfung erfolgte mittels Gitterschnitt entsprechend ISO 2409. Folgende Ergebnisse wurden erhalten:

| | |
|---|---|
| Beispiel mit erfindungsgemäßen Lösemittelgemisch | Gt 0-1 |
| Beispiel mit Vergleichslösemittelgemisch | Gt 3-4 |

## Patentansprüche

1. Verfahren zur Lackierung von Kunststoffsubstraten durch Aufbringen einer Haftschicht aus einem wasserbasierenden haftvermittelnden Überzugsmittel sowie gegebenenfalls mindestens einer weiteren Überzugsschicht, welches **dadurch gekennzeichnet ist, dass** vor der Applikation des wasserbasierenden haftvermittelnden Überzugsmittels die Kunststoffoberfläche mit einem Gemisch organischer Lösemittel aus einem oder mehreren aliphatischen und/oder cycloaliphatischen Kohlenwasserstoffen des Siedebereiches 25 bis 315°C und/oder einem oder mehreren aromatischen Kohlenwasserstoffen des Siedebereiches 120 bis 190°C, die im Gemisch mit 1 bis 20 Gew.-% eines oder mehrerer höher polarer organischer Lösemittel vorliegen, gereinigt wird.

2. Verfahren nach Anspruch 1, **dadurch gekennzeichnet, dass** man haftvermittelnde Überzugsmittel verwendet, die als Haftvermittler ein oder mehrere chlorierte und/oder chlorfreie Polyolefine enthalten.

3. Verfahren nach einem der Ansprüche 1 oder 2, **dadurch gekennzeichnet, dass** man gleichzeitig mit der Reinigung eine mechanische Behandlung der Kunststoffoberfläche durchführt.

4. Verfahren nach einem der Ansprüche 1 bis 3, **dadurch gekennzeichnet, dass** als Kunststoffsubstrate Fahrzeuge oder deren Teile lackiert werden.

## Claims

1. Process for lacquering plastics substrates by applying an adhesive layer comprising a water-based adhesion-promoting coating composition and optionally applying at least one further coating layer, which process is **characterised in that**, before application of the water-based adhesion-promoting coating composition, the plastics surface is cleaned with a mixture of organic solvents comprising one or more aliphatic and/or cycloaliphatic hydrocarbons having a boiling range from 25 to 315°C and/or one or more aromatic hydrocarbons having a boiling range from 120 to 190°C, which are present in admixture with from 1 to 20 wt.% of one or more higher-polar organic solvents.

2. Process according to claim 1, **characterised in that** the adhesion-promoting coating compositions used comprise as adhesion promoter one or more chlorinated and/or chlorine-free polyolefins.

3. Process according to either claim 1 or claim 2, **characterised in that** mechanical treatment of the plastics surface is carried out at the same time as the cleaning.

4. Process according to any one of claims 1 to 3, **characterised in that** the plastics substrates that are lacquered are motor vehicles or parts thereof.

## Revendications

1. Procédé pour laquer des substrats en matière synthétique, par application d'une couche adhésive, formée d'un produit de revêtement conférant de l'adhésion, à base d'eau, ainsi que, le cas échéant, d'au moins une autre couche de revêtement, **caractérisé en ce que**, avant l'application du produit de revêtement conférant une adhésion à base d'eau, la surface de la matière synthétique est nettoyée avec un mélange de solvants organiques, formé d'un ou plusieurs hydrocarbures aliphatiques ou cycloaliphatiques, de la plage d'ébullition de 25 à 315°C et/ou d'un ou plusieurs hydrocarbures aromatiques, de la plage d'ébullition de 120 à 190°C, se présentant en mélange, comprenant de 1 à 20 % en poids d'un ou plusieurs solvants organiques à polarité plus élevée.

2. Procédé selon la revendication 1, **caractérisé en ce qu'**on utilise des produits de revêtement conférant de l'adhésion, contenant, comme agent conférant de l'adhésion, une ou plusieurs polyoléfine chlorée(s) et/ou non chlorée(s).

3. Procédé selon l'une des revendications 1 ou 2, **caractérisé en ce qu'**on effectue, simultanément au nettoyage, un traitement mécanique de la surface de la matière synthétique.

4. Procédé selon l'une des revendications 1 à 3, **caractérisé en ce qu'**on laque, en tant que substrat en matière synthétique, des véhicules ou bien leurs pièces.
